# EUROPÄISCHE PATENTSCHRIFT

(11) **EP 0 473 919 B1**
(45) Veröffentlichungstag und Bekanntmachung des Hinweises auf die Patenterteilung: **06.11.1996**
(21) Anmeldenummer: 91112061.6
(22) Anmeldetag: 18.07.1991
(51) Int. Cl.: G01F 1/84

(54) **Vorrichtung zum Erfassen und Dosieren von Massedurchflüssen**
Device for measurement and dosage of mass flows
Dispositif pour la mesure et le dosage des débits massiques

(30) Priorität: 04.09.1990 DE 4027936
(43) Veröffentlichungstag der Anmeldung: 11.03.1992
(73) Patentinhaber: Zaschel, Jörg, Dr., 64367 Mühltal (DE)
(72) Erfinder: Zaschel, Jörg, Dr., 64367 Mühltal (DE)
(74) Vertreter: Wolf, Eckhard, Dr.-Ing.

(56) Entgegenhaltungen:
- EP-A- 253 504
- EP-A- 317 340
- EP-A- 421 812
- WO-A-89/11635
- DE-A- 2 944 386
- DE-A- 3 520 881
- DE-A- 3 632 851
- DE-A- 3 824 351
- GB-A- 2 192 714
- GB-A- 2 202 631
- US-A- 2 624 198
- US-A- 3 355 944
- K.W.Bonfig; "Technische Durchflussmessung", Vulkan-Verlag, Essen, 1987, S.183-187

## Beschreibung

Die Erfindung betrifft eine Vorrichtung zum Erfassen von Massedurchflüssen der im Oberbegriff des Anspruchs 1 angegebenen Gattung.

Derartige Vorrichtungen kommen beispielsweise zum Einsatz in Produktions- und Prüfanlagen der chemischen und pharmazeutischen Industrie, der Kunststoff-, Getränke-, Lebensmittel- und Futtermittelindustrie sowie der Papierindustrie. Ein weiteres Einsatzgebiet betrifft die Forschung in Industrie und Hochschule.

Bei einem bekannten Massedurchfluß-Erfassungsgerät der eingangs angegebenen Art (DE-A-36 32 851) sind zwei flüssigkeitsdurchströmte Meßrohre vorgesehen, die an je ein Verteilerstück angeschlossen sind, das über je einen kurzen rohrförmigen Ansatz mit dem Innenrand einer ringförmigen Membran verbunden ist. Der Außenrand der Membran ist mit einem Haltering verbunden, der in der Haltebuchse des Trägerrohrs eingespannt ist. Die Meßrohre und die Verteilerstücke bilden somit ein mechanisches Schwingungssystem, das schwingend in dem als Trägerrohr ausgebildeten Gehäuse befestigt ist. Die Meßrohre werden dort über den Schwingungserreger zu Biegeschwingungen angeregt, die zu einer periodischen Verkürzung und Streckung des Abstandes zwischen den beiden Verteilerstücken führen. Zur Schwingungsentkopplung ist daher eine aufwendige Membrananordnung erforderlich, die zusätzlich als Durchgangsrohr zwischen Prozeßrohrleitung und Meßrohr fungiert.

Weiter ist es bei einem Massedurchfluß-Meßgerät bekannt (EP-A 253 504 und EP-A 317 340), das Meßrohr im Bereich seiner ein- und auslaßseitigen Enden mit Klemmringen zu versehen, die schwer genug sind, um das zu Biegeschwingungen angeregte Rohr an ihren Enden bewegungslos zu halten. Im Bereich der Rohrenden sind außerdem zylindrische Faltenbalge eingeformt, die die thermische Längsausdehnung des Rohrs kompensieren und eine Schallübertragung vermeiden sollen. In der EP-A-317 340 sind die Klemmringe miteinander verbunden, aber nicht starr, sondern so, daß sie sich axial gegeneinander bewegen können.

In der nachveröffentlichten EP 421 812 ist ein Durchflußmesser beschrieben, bei welchem ein helixförmiges Meßrohr am Eintritts- und Austrittspunkt mit einem gehäusefesten zylindrischen Rahmen fest verbunden ist. Der Schwingungserreger einerseits und die Sensoren andererseits sind auf separaten Trägern angeordnet, die an ihren Enden jeweils an benachbarten, parallel verlaufenden Windungsabschnitten der Helix befestigt sind. Die mechanische Entkopplung gegenüber dem Gehäuse und der Prozeßrohrleitung erfolgt über isolierende Leitungsbögen, die sich zwischen der Einspannstelle am Außenrahmen und einem mit den Meßwindungen der Helix verbundenen Balken erstrecken.

Der Erfindung liegt die Aufgabe zugrunde, das bekannte Massedurchfluß-Erfassungsgerät der eingangs angegebenen Art dahingehend zu verbessern, daß mit besonders einfachen Mitteln eine wirksame schwingungsmäßige Entkopplung des Meßrohrs von der Prozeßrohrleitung erreicht wird, so daß die Vorrichtung auch für hochpräzise Massedosiergeräte verwendet werden kann.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den Unteransprüchen.

Der Kern der Erfindung besteht also in einer schwingungsmäßigen Entkopplung des Meßrohrs von der Prozeßrohrleitung. Hierdurch wird ein störungsunempfindlicher Betrieb der Massedurchfluß-Erfassungsvorrichtung gewährleistet, und zwar in einem Ausmaß, das den Einsatz der erfindungsgemäßen Vorrichtung für hochpräzise Massedosiergeräte gestattet.

Eine bevorzugte Ausgestaltung der Erfindung sieht vor, daß das Meßrohr und der Tragrahmen derart schwingungsmäßig aufeinander abgestimmt sind, daß sich die Meßrohr- und Tragrahmenschwingungen an den Einpannstellen des Meßrohrs mit dem Tragrahmen kompensieren. Dadurch wird erreicht, daß über die kritischen Verbindungsstellen des Meßrohrs mit der Prozeßrohrleitung keine Schwingungsanteile des internen Schwingungssystems in die Prozeßrohrleitung gelangen, so daß eine Schwingungsleckage wirksam unterbunden ist.

Als begleitende Maßnahme für die interne Schwingungskompensation kann ein am Tragrahmen eingespannter Antiresonator vorgesehen werden, dessen Resonanzfrequenz auf die Drehschwingung des Meßrohrs und/ oder die Schwingungen des Tragrahmens abgestimmt ist. Der Antiresonator kann dabei ein Stab oder ein nicht vom zu messenden Fluid durchströmtes Rohr sein, der bzw. das parallel zum Meßrohr verläuft.

Die erfindungsgemäße Massedurchfluß-Erfassungsvorrichtung eignet sich aufgrund ihrer hochgradigen Störunempfindlichkeit besonders gut zum Dosieren von Massen. Deshalb wird gemäß einer bevorzugten Ausgestaltung der Erfindung vorgeschlagen, daß das aus Tragrahmen und Meßrohr bestehende Schwingungsgebilde in eine Dosiereinrichtung integriert sind, wobei das schwingungsentkoppelte Meßrohr ausgangseitig an die Dosiereinrichtung angeschlossen ist.

Vorteilhafterweise ist die Kombination von Meßrohr und Dosiereinrichtung in Gestalt eines automatischen Dosiergeräts realisiert. Zu diesem Zweck ist es vorgesehen, die Dosiereinrichtung mit einem Stellglied zu versehen, welches an den Auslaßabschnitt des Meßrohrs angeschlossen ist. Bei dem Stellglied handelt es sich vorzugsweise um ein Stellventil oder eine Pumpe. Für die automatische Steuerung und Betätigung der Dosiereinrichtung kann ein elektronischer Steuerschaltkreis vorgesehen werden, der eine Sollwerteingabe für die zu dosierende Fluidmenge und einen vom Durchfluß-Istwert und vom Sollwert beaufschlagten Regler umfaßt, der das Stellglied mit einem Stellsignal versorgt.

Nachfolgend wird die Erfindung anhand der Zeichnung näher erläutert. Es zeigen:
- Fig. 1: ein erfindungsgemäßes automatisches Dosiergerät in schematischer, teilweise geschnittener Darstellung;
- Fig. 2: einen Schnitt durch die Massedurchfluß-Erfassungsvorrichtung des Dosiergeräts nach Fig. 1;
- Fig. 3: eine Ansicht der Massedurchfluß-Erfassungsvorrichtung nach Fig. 1 in Richtung des Pfeils y der Fig. 2;
- Fig. 4: ein Blockschaltbild eines Steuerschaltkreises für das Dosiergerät;
- Fig. 5: eine weitere Ausführungsform einer schwingungsentkoppelten Massedurchfluß-Erfassungsvorrichtung.

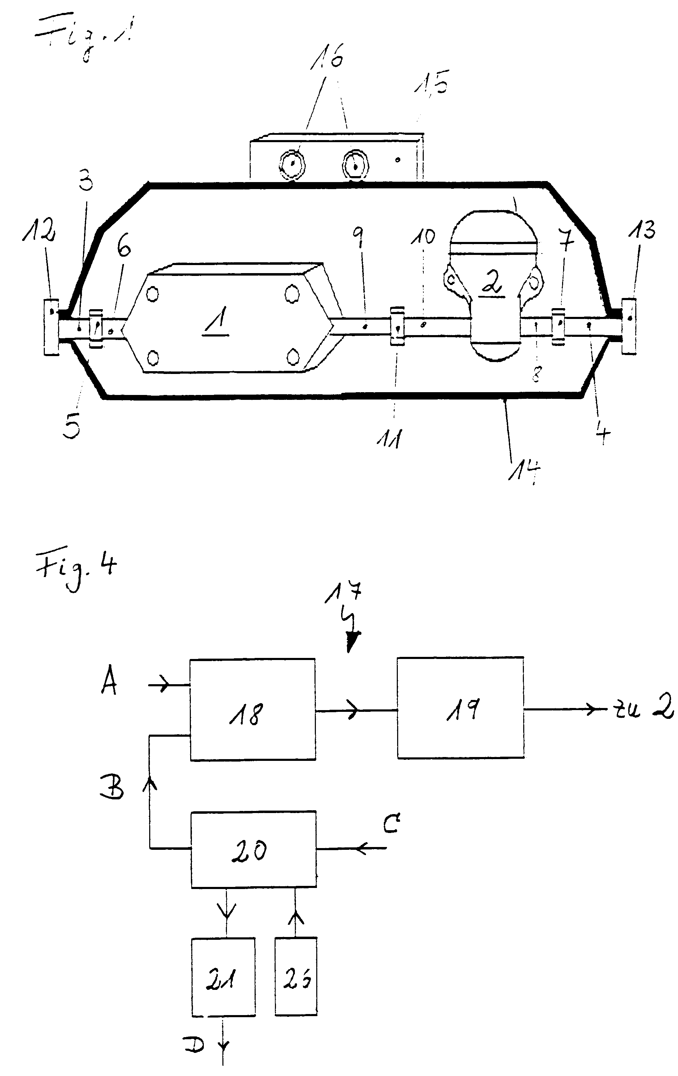

Das in Fig. 1 schematisch dargestellte Dosiergerät umfaßt einen Meßgrößenwandler 1, ein Stellventil 2, einen Dosiergeräte-Einlaß 3 sowie einen Dosiergeräte-Auslaß 4. Einlaß 3 und Auslaß 4 sind als endseitig jeweils mit Flanschen versehene Rohre ausgebildet und der Einlaß 3 ist über einen innenliegenden Flansch 5 mit dem Meßgrößenwandler-Einlaß 6 verbunden, während der Auslaß 4 über einen Flansch 7 mit dem Auslaß 8 des Stellventils 2 verbunden ist. Ferner weist der Meßgrößenwandler 1 einen Auslaß 9 und das Stellventil 2 einen Einlaß 10 auf, und Ein- sowie Auslaß des Meßgrößenwandlers und des Stellventils sind jeweils ebenfalls als Rohre ausgebildet. Zur Verbindung des Meßgrößenwandler-Auslasses 9 mit dem Stellventil-Einlaß 10 ist eine weitere Flanschverbindung 11 vorgesehen. Die vorstehend genannten Teile sind bis auf die außenliegenden Flanschanschlüsse 12 und 13 des Dosiergeräte-Einlasses 3 und des Dosiergeräte-Auslasses 4 innerhalb eines gemeinsamen ringsum geschlossenen Gehäuses 14 angeordnet und an der Innenwandung des Gehäuses mittels Schrauben befestigt, die den verkapselten Meßgrößenwandler 1 und Befestigungsflansche des Stellventils 2 durchsetzen. Schließlich ist am Gehäuse 14 außenliegend ein Meß- und Steuerschaltkreis angeordnet, der in einem eigenen Gehäuse 15 untergebracht, dessen eine Wandung Buchsen 16 trägt, die an einen innengelegenen Schaltkreis angeschlossen sind sowie über nicht dargestellte Verbindungsleitungen an ebenfalls nicht dargestellte Buchsen am Gehäuse 14 angeschlossen sind, die ihrerseits in Verbindung stehen mit Anschlüssen des Meßgrößenwandlers 1 und des Stellventils 2 (ebenfalls nicht dargestellt).

Das Dosiergerät ist über die Einlässe 3 und 4 an eine nicht dargestellte Prozeßrohrleitung angeschlossen. Dadurch gelangt Meßstoff vom Einlaß 3 kommend über den Meßgrößenwandler 1 zum Stellventil 2 und von dort zum Auslaß 4. Der Meßgrößenwandler 1 stellt den Ist-Wert des Massedurchflusses mit Hilfe des Steuerschaltkreises fest, der das Regelventil mit einem vorgegebenen Sollwert für den Massedurchfluß ansteuert.

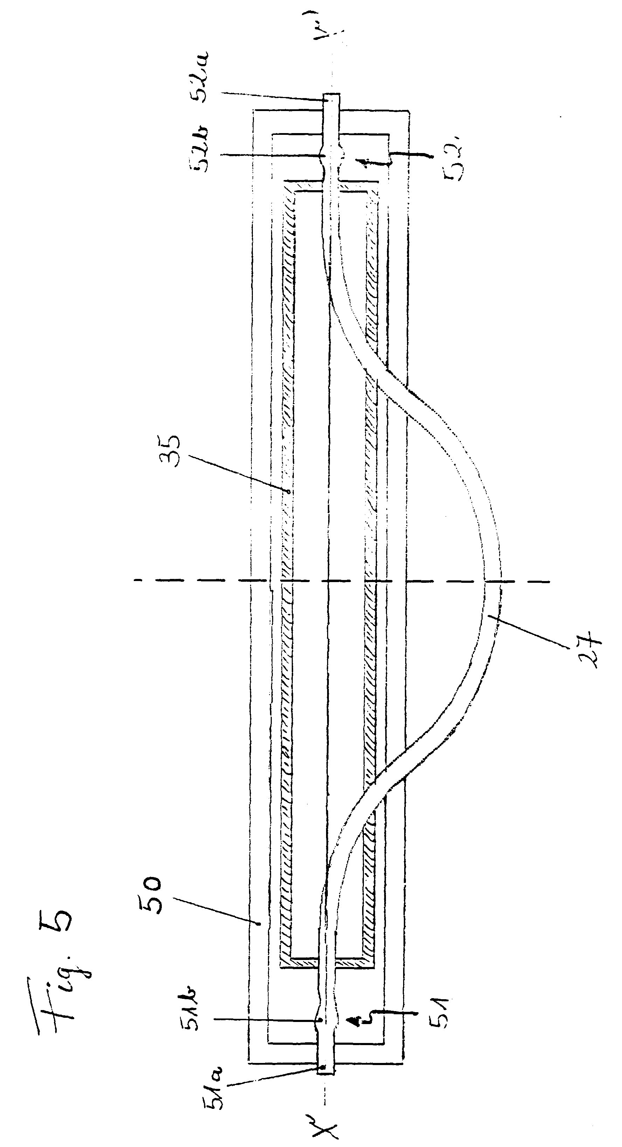

Das Blockschaltbild des Steuerschaltkreises ist in Fig. 4 dargestellt. Der Steuerschaltkreis 17 umfaßt demnach einen vom Massedurchfluß-Sollwert A und dem Massedurchfluß-Istwert B beaufschlagten Regler 18, der einen Stellwert ermittelt und an einen Treiber 19 abgibt, über welchen das Stellventil 2 angesteuert, nämlich eingestellt wird. Der dann aktuelle Massedurchfluß wird an C in eine Meßeinrichtung 20 eingespeist, die den Meßgrößenwandler 1 und einen Signalverarbeitungsteil umfaßt sowie eine Auswerteeinheit. Über eine an die Meßeinrichtung 20 angeschlossene Ausgabeeinheit 21 werden die Dosierwerte in Form von Anzeigen D oder in Form von elektrischen Signalen dargestellt.

Wie aus Fig. 2 hervorgeht, umfaßt der Meßgrößenwandler 1 als Kernstück ein einziges Meßrohr 27, das aus geradlinigen Ein- und Auslässen 28 und 29 und einem gebogenen zentralen Abschnitt 30 besteht. Einlaß und Auslaß 28 und 29 liegen fluchtend auf einer gemeinsamen Achse X-X', die in einer gemeinsamen Ebene mit dem gebogenen Rohrstück 30 angeordnet ist. Das Meßrohr 27 ist im Bereich seines Einlasses 28 und seines Auslasses 29 in Platten 31 und 32 fest eingespannt, die mittels Streben 33 und 34 zu einem Tragrahmen 35 starr miteinander verbunden sind. Die Anordnung aus Tragrahmen 35 und Meßrohr 27 ist schwingend über den Meßrohreinlaß 28 und den Meßrohrauslaß 29 mittels Klemmböcken 36 und 37 am Meßgrößenwandlergehäuse 38 befestigt. Durch die schwingende Aufhängung des Meßrohr-Tragrahmenaufbaus wird in erster Linie verhindert, daß Schwingungen aus der Prozeßrohrleitung in das Meßrohr einzutreten vermögen. Die Prozeßrohrleitung leitung ist beispielsweise drehbar an den Einlaß 28 und den Auslaß 29 des Meßrohrs 27 angeschlossen. Um zu verhindern, daß interne Schwingungen des Meßrohrs 27 auf die Prozeßrohrleitung übertragen werden, sind Meßrohr 27 und Tragrahmen 35 derart aufeinander schwingungsmäßig abgestimmt, daß sich Meßrohr- und Tragrahmenschwingungen an den Verbindungsstellen von Meßrohr und Tragrahmen kompensieren.

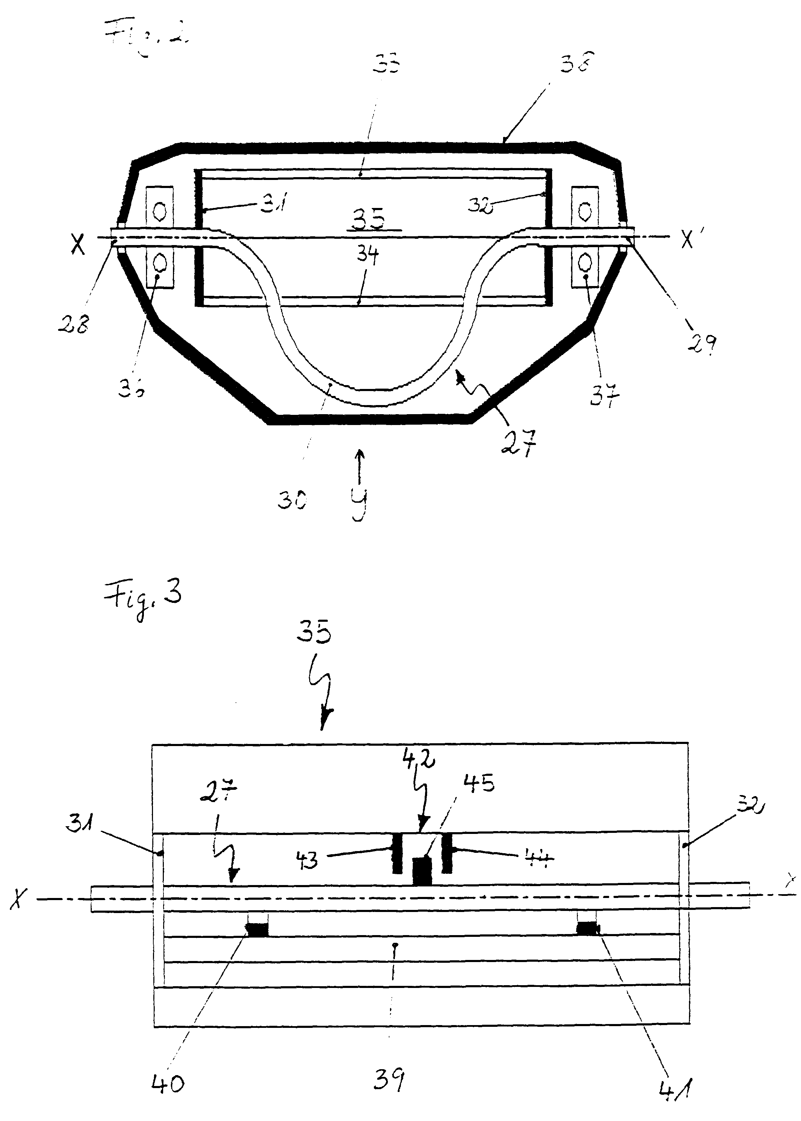

Eine andere Ansicht des Meßgrößenwandlers von Fig. 2 ist in Fig. 3 dargestellt, und zwar in einer Draufsicht entlang dem Pfeil Y von Fig. 2, wodurch das geschwungene Meßrohr 27 in der Darstellung von Fig. 3 scheinbar einen geradlinigen Verlauf einnimmt. Aus der um 90° gegenüber Fig. 2 geschwenkten Darstellung des Meßgrößenwandlers von Fig. 3 wird deutlich, daß in den Tragrahmen 35 zusätzlich zu dem Meßrohr 27 ein Antiresonator 39 in Gestalt eines dem Meßrohr entsprechend gekrümmten Rohres eingespannt ist, das von dem Meßfluid nicht durchflossen wird und parallel zur Geraden X-X verläuft. Der Antiresonator 39 weist eine Eigenresonanz auf, deren Frequenz im wesentlichen mit derjenigen des vom Meßfluid durchflossenen Meßrohres 27 übereinstimmt. Durch diese Maßnahme wird ein abgestimmtes internes Schwingungssystem gebildet, bestehend aus Meßrohr 27, Tragrahmen 35 und Antiresonator 29. Erreicht wird diese Schwingungsabstimmung beispielsweise durch an sich bekannte Finite-Element-Methoden.

Auf dem Antiresonator 39 sind im Krümmungsbereich Stellungsfühler 40 und 41 angebracht, welche die aktuelle Position des schwingenden Meßrohrs 37 abtasten. Geeignete Fühler sind beispielsweise elektrodynamische, piezo-elektrische, optische oder magnetostriktive Fühler.

Zum Schwingen angeregt wird das Meßrohr 27 durch einen Schwingungserreger 42, der in an sich bekannter Weise ausgebildet ist und zwei Erregerelemente 43 und 44 umfaßt, die fest mit dem Tragrahmen 35 verbunden sind sowie ein weiteres Erregerelement 45, das fest mit dem Meßrohr 27 verbunden ist.

Mit Hilfe des Schwingungserregers 42 wird das Meßrohr 27 in Drehschwingungen um die Achse X-X' versetzt. Durch ihre Überlagerung mit der Fließgeschwindigkeit des in dem Meßrohr 27 strömenden Meßstoffes entstehen in dem gekrümmten Rohrabschnitt 30 Coriolisbeschleunigungen, die auf bekannte Weise mit der momentan im Rohrabschnitt 30 befindlichen Masse des Meßstoffes zusammen Corioliskräfte erzeugen, die an ihren Entstehungsorten auf das Meßrohr 27 einwirken und mit den Fühlern 40 und 41 erfaßt werden, die elektrische Ausgangssignale an den Schaltkreis 17 abgeben.

Der Schwingungserreger 42 ist an einen Oszillator 26 (Fig. 4) des Schaltkreises 17 angeschlossen und wird von diesem in bekannter Weise angetrieben.

Fig. 5 zeigt eine weitere Ausführungsform der Meßrohraufhängung innerhalb des Meßgrößenwandlergehäuses 38. Die Maßnahmen zur schwingungsmäßigen Entkopplung des Meßrohrs 27 von der nicht dargestellten Prozeßrohrleitung umfassen gemäß Fig. 5 neben dem bereits anhand von Fig. 2 beschriebenen Tragrahmen 35 einen Außenrahmen 50, in welchen schwingungsabsorbierende Rohrelemente 51 und 52 eingespannt sind. Die Rohrelemente 51 und 52 ersetzen die Meßrohreinlaß- und Auslaßrohre 28 und 29 von Fig. 2 und umfassen starre Rohrabschnitte 51a und 52a, die fest mit dem Außenrahmen 50 verbunden und an die Prozeßrohrleitung angeschlossen sind. Weiterhin umfassen die Rohrelemente 51 und 52 "weichere" Abschnitte 51b und 52b, über welche sie an das Meßrohr 27 angeschlossen sind. Die Materialangabe "weicher" bezieht sich auf die Biege-, Torsions- und Längs- bzw. Zug- und Drucksteifigkeit der Brückenrohrteile 51b und 52b, wobei die genannten Steifigkeiten mit Bezug auf die des Außenrahmens 50 wesentlich geringer sind. Durch diese Maßnahme wird erreicht, daß Schwingungen der Prozeßrohrleitung in den Außenrahmen eingeleitet und vernichtet werden, ohne daß diese parasitären Schwingungen in das System aus Tragrahmen 35 und Meßrohr 27 eingeleitet werden, welche Teile ein internes Schwingungssystem darstellen, das eine Leckage von internen Schwingungen zu der Prozeßrohrleitung aufgrund seiner Abstimmung unterbindet, wie anhand von Fig. 2 dargestellt.

## Patentansprüche

1. Vorrichtung zum Erfassen von Massedurchflüssen nach dem Coriolis-Prinzip,
a) mit einem Gehäuse (38) oder einem Außenrahmen (50);
b) mit mindestens einem Meßrohr (27), das über seine fluchtend auf einer gemeinsamen Achse (X-X') liegenden Ein-und Auslaßabschnitte (28,29;51,52) an eine von einem Fluid durchströmte Prozeßrohrleitung anschließbar ist,
c) mit einem an das Meßrohr (27) angekoppelten Schwingungserreger (42),
d) mit einer Fühlereinrichtung (40,41) zum Erfassen von Schwingungen des Meßrohrs (27),
e) mit einer Auswerteeinrichtung zum Ermitteln des Massedurchflusses aus dem Ausgangssignal der Fühlereinrichtung (40,41)
f) und mit zwei an den Ein- und Auslaßabschnitten (28, 29;51,52) des Meßrohrs eingespannten Stirnplatten (31,32), die unter Bildung eines Tragrahmens (35) miteinander verbunden sind,
g) wobei das aus Meßrohr (27) und Tragrahmen (35) bestehende Schwingungsgebilde unter schwingungsmäßiger Entkopplung des Meßrohrs von der Prozeßrohrleitung mit Hilfe der über die Stirnplatten (31,32) des Tragrahmens (35) überstehenden Ein-und Auslaßabschnitte (28,29,51,52) des Meßrohrs (27) schwingend am Gehäuse (38) oder am Außenrahmen (50) befestigt ist,
**dadurch gekennzeichnet,**
h) daß die beiden Stirnplatten (31,32) des Tragrahmens (35) starr miteinander verbunden sind,
i) daß das Meßrohr (27) einen zwischen den geradlinigen Ein- und Auslaßabschnitten (28,29;51,52) angeordneten, gebogenen zentralen Rohrabschnitt (30) aufweist,
j) daß das Meßrohr (27) durch den Schwingungserreger (42) zu Drehschwingungen um die gemeinsame Achse (X-X') der an den Stirnplatten (31,32) eingespannten Ein- und Auslaßabschnitte (28,29; 51,52) anregbar ist.

2. Vorrichtung nach Anspruch 1, **dadurch gekennzeichnet**, daß das Meßrohr (27) und der Tragrahmen (35) derart schwingungsmäßig aufeinander abgestimmt sind, daß sich die Meßrohr- und Tragrahmenschwingungen an den Einspannstellen des Meßrohrs (27) mit dem Tragrahmen (35) kompensieren.

3. Vorrichtung nach Anspruch 1 oder 2, **dadurch gekennzeichnet**, daß in den Tragrahmen (35) ein parallel zum Meßrohr verlaufender Stab oder ein nicht vom zu messenden Fluid durchströmtes Rohr eingespannt ist, dessen Resonanzfrequenz unter Bildung eines Antiresonators (39) auf die Drehschwingung des Meßrohres (27) und/oder die Schwingung des Tragrahmens (35) abgestimmt ist.

4. Vorrichtung nach Anspruch 3, **dadurch gekennzeichnet**, daß der Antiresonator (39) an den Verbindungsstellen des Meßrohres (27) mit den Tragrahmen (35) angeschlossen ist.

5. Vorrichtung nach Anspruch 3 oder 4, **dadurch gekennzeichnet**, daß der Antiresonator (39) die Gestalt eines dem Meßrohr (27) entsprechend gekrümmten Rohres aufweist.

6. Vorrichtung nach Anspruch 5, **dadurch gekennzeichnet**, daß die Fühlereinrichtung im Krümmungsbereich des Antiresonators (39) angeordnete Fühler (40,41) aufweist.

7. Vorrichtung nach einem der Ansprüche 1 bis 6, **dadurch gekennzeichnet**, daß der Schwingungserreger (42) am Tragrahmen (35) und am Meßrohr (27) angeordnete Erregerelemente (43,44;45) aufweist.

8. Vorrichtung nach einem der Ansprüche 1 bis 7, **dadurch gekennzeichnet**, daß die Vorrichtung in eine Dosiereinrichtung integriert ist.

9. Vorrichtung nach Anspruch 8, **dadurch gekennzeichnet**, daß die Dosiereinrichtung ein vorzugsweise als Stellventil oder Pumpe ausgebildetes Stellglied (2) umfaßt, das an den Auslaßabschnitt (29,52) des Meßrohrs (27) angeschlossen ist.

10. Vorrichtung nach Anspruch 9, **dadurch gekennzeichnet**, daß die Dosiereinrichtung einen elektronischen Steuerschaltkreis (17) mit einer Sollwerteingabe für die zu dosierende Fluidmenge und einen vom Durchfluß-Istwert und vom Sollwert beaufschlagten Regler (18) umfaßt, der ein Stellsignal für das Stellglied (2) bildet.

11. Vorrichtung nach einem der Ansprüche 8 bis 10, **dadurch gekennzeichnet**, daß die Vorrichtung ein in einem gemeinsamen Gehäuse (14) angeordnetes automatisches Dosiergerät bildet.

12. Vorrichtung nach einem der Ansprüche 1 bis 11, **dadurch gekennzeichnet**, daß die Fühlereinrichtung piezoelektrische, elektrodynamische, optische oder magnetostriktive Fühler (40,41) aufweist.

## Claims

1. A device for determining mass flow according to the Coriolis principle, comprising
a) a casing (38) or an external frame (50),
b) at least one measuring tube (27) which is connectable to a process pipeline through which a fluid flows by means of inlet and outlet sections (28, 29; 51, 52) of the measuring tube, which are aligned on a common axis (X-X'),
c) an oscillation generator (42) which is coupled to the measuring tube (27),
d) a sensing device (40, 41) for detecting oscillations of the measuring tube (27),
e) an evaluation device for determining the mass flow from the output signal of the sensing device (40, 41),
f) and two face plates (31, 32) which are clamped to the inlet and outlet sections (28, 29; 51, 52) of the measuring tube, which are connected to each other, thus forming a support frame (35),
g) wherein the oscillating structure consisting of the measuring tube (27) and the support frame (35) is connected to the casing (38) or external frame (50), permitting oscillation, by means of the inlet and outlet sections (28, 29; 51, 52) of the measuring tube (27), which protrude over the face plates (31, 32) of the support frame (35),
**characterized in that**
h) the two face plates (31, 32) of the support frame (35) are rigidly connected to each other,
i) that the measuring tube (27) has a bent central tube section (30) which is positioned between the straight inlet and outlet sections (28, 29; 51, 52),
j) and that the measuring tube (27) can be excited to oscillate rotationally about the common axis (X-X') of the inlet and outlet sections (28, 29; 51, 52) which are clamped in the face plates (31, 32).

2. The device of claim 1, **characterized in that** the measuring tube (27) and the support frame (35) are matched to each other with respect to the oscillation such that the oscillations of the measuring tube and the support frame compensate each other at the clamping points of the measuring tube (27).

3. The device of claim 1 or 2, **characterized in that** a rod or a tube through which the fluid to be measured does not flow, which extends parallel to the measuring tube, is clamped in the support frame (35), the resonance frequency of which rod or tube is matched to the rotational oscillation of the measuring tube (27) and/or the oscillation of the support frame (35), such that an anti-resonator (39) is formed.

4. The device of claim 3, **characterized in that** the anti-resonator (39) is connected to the clamping points of the measuring tube (27) to the support frame (35).

5. The device of claim 3 or 4, **characterized in that** the anti-resonator (39) has the shape of a tube which is bent corresponding to the measuring tube (27).

6. The device of claim 5, **characterized in that** the sensing device comprises sensors (40, 41) which are positioned in the region of the bend of the anti-resonator (39).

7. The device of one of claims 1 to 6, **characterized in that** the oscillation generator (42) comprises generator elements (43, 44; 45) which are positioned on the support frame (35) and on the measuring tube (27).

8. The device according to one of claims 1 to 7, **characterized in that** the device is integrated into a proportioning device.

9. The device of claim 8, **characteized in that** the proportioning device comprises a servo positioner (2) which is preferably designed to be a servo valve or pump and which is connected to the outlet section (29, 52) of the measuring tube (27).

10. The device of claim 9, **characterized in that** the proportioning device comprises an electronic control circuit (17) with an input for the desired value of the amount of fluid to be proportioned and a control unit (18) which is fed with the actual value of the flow and the desired value and which generates a servo signal for the servo positioner (2).

11. The device of one of claims 8 to 10, **characterized in that** the device is designed to be an automatic proportioning device which is arranged in a common housing (14).

12. The device of one of claims 1 to 11, **characterized in that** the sensing device comprises piezoelectric, electrodynamic, optical or magnetostrictive sensors (40, 41).

## Revendications

1. Dispositif pour mesurer des débits massiques suivant le principe de Coriolis,
a) avec un boîtier (38) ou un cadre externe (50),
b) avec au moins un tube de mesure (27) qui peut être raccordé, par ses sections d'entrée et de sortie (28, 29; 51, 52) alignées sur un axe commun (X - X'), à une conduite de procédé parcourue par un fluide,
c) avec un générateur de vibrations (42) accouplé au tube de mesure (27),
d) avec un système de détection (40, 41) pour enregistrer les vibrations du tube de mesure (27),
e) avec un dispositif d'analyse pour déterminer le débit massique à partir du signal de sortie du système de détection (40, 41),
f) et avec deux plaques frontales (31, 32), fixées sur les sections d'entrée et de sortie (28, 29; 51, 52) du tube de mesure et assemblées entre elles en formant un cadre porteur (35),
g) la structure vibrante, composée du tube de mesure (27) et du cadre porteur (35), étant fixée en vibrant sur le boîtier (38) ou sur le cadre externe (50) à l'aide des sections d'entrée et de sortie (28, 29, 51, 52) du tube de mesure (27), qui dépassent des plaques frontales (31, 32) du cadre porteur (35), avec un découplage des vibrations entre le tube de mesure et la conduite de procédé,
caractérisé en ce que,
h) les deux plaques frontales (31, 32) du cadre porteur (35) sont assemblées rigidement entre elles,
i) le tube de mesure (27) présente une section tubulaire centrale (30) incurvée, disposée entre les sections rectilignes d'entrée et de sortie (28, 29; 51, 52),
j) le tube de mesure (27) peut être animé, par le générateur de vibrations (42), de vibrations torsionnelles autour de l'axe commun (X - X') des sections d'entrée et de sortie (28, 29; 51, 52), fixées sur les plaques frontales (31, 32).

2. Dispositif suivant la revendication 1, caractérisé en ce que le tube de mesure (27) et le cadre porteur (35) sont mutuellement adaptés dans leur mouvement vibratoire, de sorte que les vibrations du tube de mesure et du cadre porteur se compensent aux points de fixation du tube de mesure (27) avec le cadre porteur (35).

3. Dispositif suivant l'une des revendications 1 et 2, caractérisé par la fixation dans le cadre porteur (35) d'une barre parallèle au tube de mesure ou d'un tube non parcouru par le fluide à mesurer, dont la fréquence de résonance est adaptée à la vibration torsionnelle du tube de mesure (27) et/ou à la vibration du cadre porteur (35), en formant un antirésonateur (39).

4. Dispositif suivant la revendication 3, caractérisé en ce que l'antirésonateur (39) est raccordé aux points d'assemblage du tube de mesure (27) avec le cadre porteur (35).

5. Dispositif suivant l'une des revendications 3 et 4, caractérisé en ce que l'antirésonateur (39) présente la forme d'un tube d'une courbure conforme à celle du tube de mesure (27).

6. Dispositif suivant la revendication 5, caractérisé en ce que le système de détection présente des capteurs (40, 41) disposés dans la zone de courbure de l'antirésonateur (39).

7. Dispositif suivant l'une des revendications 1 à 6, caractérisé en ce que le générateur de vibrations (42) présente des éléments excitateurs (43, 44; 45) disposés sur le cadre porteur (35) et sur le tube de mesure (27).

8. Dispositif suivant l'une des revendications 1 à 7, caractérisé en ce que le dispositif est intégré à un dispositif de dosage.

9. Dispositif suivant la revendication 8, caractérisé en ce que le dispositif de dosage comporte un organe de réglage (2), réalisé de préférence sous forme de vanne-pilote ou de pompe et raccordé à la section de sortie (29, 52) du tube de mesure (27).

10. Dispositif suivant la revendication 9, caractérisé en ce que le dispositif de dosage comporte un circuit de commande électronique (17) avec une entrée de valeur de consigne pour le débit de fluide à doser et un régulateur (18), alimenté par la valeur effective de débit et par la valeur de consigne, et formant un signal de réglage pour l'organe de réglage (2).

11. Dispositif suivant l'une des revendications 8 à 10, caractérisé en ce que le dispositif forme un appareil de dosage automatique, disposé dans un boîtier commun (14).

12. Dispositif suivant l'une des revendications 1 à 11, caractérisé en ce que le système de détection présente des capteurs (40, 41) piézoélectriques, électrodynamiques, optiques, ou à magnétostriction.
